(19) **Europäisches Patentamt**

**European Patent Office**

**Office européen des brevets**

(11) **EP 0 826 705 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(51) Int Cl.7: **C08G 18/10**, C08L 75/04, C08J 9/33

(21) Anmeldenummer: **97113931.6**

(22) Anmeldetag: **11.08.1997**

(54) **Verfahren zur Wiederverwendung von mikrozelligen Polyurethanen**

Process for reuse of microcellular polyurethanes

Procédé pour la reutilisation de polyuréthanes microcellulaires

(84) Benannte Vertragsstaaten:
**AT BE CH DE ES FR GB IT LI LU NL**

(30) Priorität: **22.08.1996 DE 19633891**

(43) Veröffentlichungstag der Anmeldung:
**04.03.1998 Patentblatt 1998/10**

(73) Patentinhaber: **BASF AKTIENGESELLSCHAFT**
**67056 Ludwigshafen (DE)**

(72) Erfinder:
• **Jeschke, Torsten**
**49152 WWimmer (DE)**
• **Kriesmann, Arne**
**49448 Lemförde (DE)**
• **Bruns, Ute**
**49808 Lingen (DE)**
• **Scholz, Wolfgang**
**49448 Lemfoerde (DE)**
• **Lüderwald, Michael-Christian**
**89075 Ulm (DE)**
• **Peuker, Hartmut**
**49143 Bissendorf (DE)**

(56) Entgegenhaltungen:
EP-A- 0 639 597    EP-A- 0 647 666
EP-A- 0 684 125    EP-A- 0 693 526
DE-A- 4 316 389    FR-A- 2 357 357

## Beschreibung

Die Erfindung bezieht sich auf ein Verfahren zur Wiederverwendung von mikrozelligen Polyurethanen.

Für die Wiederverwertung von Polyurethanen sind chemische Verfahren wie Hydrolyse, Hydrierung, Pyrolyse und Glykolyse geeignet. Des weiteren können die Polyurethane in Isocyanaten aufgelöst und das dadurch nach Reinigung erhaltene Gemisch der Wiederverwendung zugeführt werden (DE-A-43 16 389). Diesen Verfahren ist gemeinsam, daß die Polyurethane nur mit erheblichen Aufwand und zumeist nicht ohne Qualitätsverlust (z.B. erniedrigter Isocyanatgehalt in der Komponente nach dem Auflösen) wieder in ihren Produktionsprozeß eingeführt werden können.

Weitere Verfahren zum Recycling bestehen in der Herstellung von kompakten Polyurethanen aus zerkleinerten Elastomeren ("Flake Bonding") oder in der Verwendung als Füllmaterial bei der Herstellung von neuen Komponenten ("Polyurethanes Recycling - Status Report", K.W. Kroesen und D.A. Hicks, 1993, Cellular Polymers, paper 16, 1-6). Ein Einbringen von zerkleinerten Polyurethanen in die Polyolkomponente für die Herstellung von Polyisocyanat-Polyadditionsprodukten ist in US 4 692 470 beschrieben, wobei sich erhebliche Probleme durch miteingeführte Luft ergaben, die sich in einem unerwünschten Anstieg der Viskosität bemerkbar machten. Dieses Problem wurde durch das Benetzen der zerkleinerten Polyurethane mit flüchtigen Kohlenwasserstoffen gelöst. Der Zusatz dieser Substanzen ist für Systeme, in denen diese Stoffe nicht als Treibmittel eingesetzt werden, unter Umständen von Nachteil und zu vermeiden. Ein Qualitätsverlust des Polyurethans, das mit wiederverwendeten Polyurethanen hergestellt wird, gegenüber den wiederverwerteten Elastomeren, ist nach den bekannten Verfahren besonders bei mikrozelligen Polyurethanelastomeren nur schwer zu vermeiden.

Die Aufgabe der vorliegenden Erfindung bestand darin, ein Verfahren zur Wiederverwendung von mikrozelligen Polyurethanen zu entwickeln, bei dem diese wieder in den Produktionsprozeß zur Herstellung von mikrozelligen Polyurethanen eingeführt werden können, ohne daß Qualitätseinbußen hingenommen werden müssen.

Diese Aufgabe konnte erfindungsgemäß dadurch gelöst werden, daß man die Polyurethane zerkleinert und in einem ersten Reaktionsschritt mit einem Gemisch, das die zerkleinerten Polyurethane in einer Menge von 0,1 bis 40 Gew.-%, bezogen auf die Polyadditionsmischung,

(a) Polyisocyanate,

(b) gegenüber Isocyanaten reaktive Substanzen mit aktiven Wasserstoffen, und gegebenenfalls

(c) Kettenverlängerungs- und/oder Vernetzungsmittel, Katalysatoren, Treibmittel und üblichen Zusatzstoffe enthält, ein Prepolymer herstellt und dieses in einem zweiten Schritt mit Wasser und gegebenenfalls (c) zu dem Polyurethan umsetzt.

Die nach bekannten Mahlverfahren zerkleinerten Polyurethane mit einer bevorzugten Korngröße von 0,01 bis 2 mm, inbesondere 0,1 bis 2 mm, basieren vorzugsweise auf den bei der Polyaddition eingesetzten Komponenten (a), (b) und gegebenenfalls (c). Der Anteil an zerkleinerten Polyurethanen kann erfindungsgemäß 0,1 bis 40 Gew.-%, vorzugsweise 1 bis 20 Gew.-%, bezogen auf das Gewicht des Polyadditionsreaktionsgemisches, betragen.

Bevorzugt werden mikrozellige Polyurethanelastomere eingesetzt, insbesondere solche, die die gleiche Struktur aufweisen wie die, die durch Polyadditionsreaktion aus den Ausgangsstoffen (a), (b) und gegebenenfalls (c) erhältlich sind. Dies hat den Vorteil, daß mikrozelligen Polyurethanelastomere durch ihre hervorragenden Dämpfungseigenschaften bei einer ausgezeichneten Volumenkompressibilität zur Herstellung von Schwingungs- und Stoßdämpfer-Systemen wiederverwendet werden können (als Übersicht für mikrozellige Polyurethanelastomere siehe z.B.: "Naphthalene- 1,5- Diisocyanate as a Building Block for High Performance Polyurethane Elastomers", E.C. Prolingheuer, J.J. Lindsay und H. Kleimann, 1989, Journal of Elastomers and Plastics, 21, 100-121). Besonders bevorzugt werden mikrozellige Polyurethanelastomere als Abfälle aus dem Produktionsprozeß, dem sie zur Wiederverwendung zugeführt werden sollen, eingesetzt.

Die zerkleinerten Polyurethane werden vor der erfindungsgemäßen Verwendung nach bekannten Verfahren ausreichend getrocknet. Üblicherweise wird die Trocknung bei 80 bis 150°C durchgeführt. Sie ist im allgemeinen nach 1 bis 24 Stunden beendet.

Zur Herstellung der Polyurethanelastomeren werden die Substanzen (a) und (b) und die zerkleinerten Polyurethane, gegebenenfalls mit (c) , mit einem Äquivalenzverhältnis von NCO- Gruppen zur Summe der reaktiven Wasserstoffe von 0,8 bis 1,2 : 1, vorzugsweise 0,95 bis 1,1 : 1, nach dem in der Literatur beschriebenen one-shot Verfahren bei allgemein üblichen Temperaturen von 80 bis 160, vorzugsweise 90 bis 150°C umgesetzt. Das Einbringen der zerkleinerten Elastomere in die Komponente (b) oder/und in ein Prepolymer, vorzugsweise in das Prepolymer, kann ohne vorheriges Benetzen des Mahlgutes mit flüchtigen Substanzen wie nach US 4 692 470 erforderlich durchgeführt werden. Während des üblichen Verarbeitungszeitraumes des Prepolymers bzw. der Reaktionsmischung von 5 Stunden wirken sich eine Viskositätszunahme oder eine Abnahme der Reaktivität nicht negativ auf den Produktionsprozeß aus.

Bevorzugt durchgeführt wird das Prepolymerverfahren, bei dem insbesondere Isocyanat aufweisende Prepolymere verwendet werden. Diese können hergestellt werden durch die Umsetzung eines Gemisches, das die zerkleinerten Polyurethanelastomere und mindestens ein organisches Polyisocyanat (a), mindestens eine Verbindung (b), die gegenüber Isocyanaten reaktiv ist, sowie gegebenenfalls (c) enthält. Die Prepolymere weisen vorzugsweise Isocyanatgehalte von 1 bis 30 Gew.-%, besonders bevorzugt 3 bis 15 Gew.-%, bezogen auf das Gesamtgewicht, auf. Die Synthese des Prepolymers wird üblicherweise bei Temperaturen von 80 bis 160°C, vorzugsweise 90 bis 150°C durchgeführt. Die Reaktion ist im allgemeinen nach 15 bis 200 min beendet. Dieses Prepolymer wird anschließend in einem Gemisch, das die Komponente (b) sowie gegebenenfalls (c) enthält und ein Äquivalenzverhältnis von NCO-Gruppen zu der Summe der reaktiven Wasserstoffe von 0,8 bis 1,2 : 1, vorzugsweise 0,95 bis 1,1 : 1, aufweist, zum gewünschten Polyurethanelastomer umgesetzt.

Als Substanzen (a) und (b) zur Herstellung mikrozellulärer Polyurethanelastomere eignen sich die aus der Polyurethanchemie bekannten Verbindungen, zu denen folgendes ausgeführt wird:

a) Als Polyisocyanate (a) werden aromatische, aliphatische oder/und cycloaliphatische Diisocyanate verwendet. Beispiele für die aromatischen Diisocyanate sind: 1,5-Naphthylen-diisocyanat (1,5-NDI), 2,4- und 2,6-Toluylendiisocyanat (TDI) sowie deren Gemische, 2,4'-, 2,2'-, und vorzugsweise 4,4'-Diphenylmethan-diisocyanat (MDI) sowie Mischungen aus mindestens zwei dieser Isomere, 3,3'-Dimethyldiphenyl-diisocyanat, z.B. 3,3'-Dimethyl-4,4'-diisocyanat-diphenyl, 1,2-Diphenylethandiisocyanat und Phenyldiisocyanat, vorzugsweise 1,4-Phenyldiisocyanat (PPDI). Die aromatischen Isocyanate werden einzeln oder im Gemisch von mindestens zwei verschiedenen Isocyanaten eingesetzt. Als aliphatische, verzweigtkettige oder vorzugsweise lineare, Diisocyanate mit 4 bis 12 Kohlenstoffatomen, vorzugsweise 4 bis 6 Kohlenstoffatomen, werden genannt: 1,12-Dodecan-, 2-Ethyl-1,4-butan-, 2-Methyl-1,5-pentan- oder/und 1,4-Butan-diisocyanat, bevorzugt 1,6-Hexamethylen-diisocyanat (HDI). Zu verwenden sind als cycloaliphatische Diisocyanate mit 6 bis 18 Kohlenstoffatomen, vorzugsweise 6 bis 12 Kohlenstoffatomen, im alkylsubstituierten oder nicht-alkylsubstituierten Cycloalkylrest z.B.: Cyclohexan-1,3- oder/und -1,4-diisocyanat, 2,4- oder/und 2,6-Hexahydrotoluylen-diisocyanat, 4,4'-, 2,4'-, oder/und 2,2'-Dicyclohexanmethan-diisocyanat, vorzugsweise 1-Isocyanato-3,3,5,-trimethyl-5-isocyanato-methylcyclohexan (IPDI).

b) Gegenüber Isocyanaten reaktive Verbindungen (b) enthalten üblicherweise Polyhydroxylverbindungen mit einer Funktionalität von 2 bis 3, vorzugsweise 2 und einem Molekulargewicht von 500 bis 6000, vorzugsweise 800 bis 3500, besonders bevorzugt 1000 bis 3300 g/mol. Beispielsweise können als (b) verwendet werden: Polyesterpolyole aus organischen Dicarbonsäuren und /oder Dicarbonsäurederivaten und 2- bis 3-wertigen Alkoholen und/oder Dialkylenglykolen, hydroxylgruppenhaltige Polycarbonate, Hydroxycarbonsäuren oder Lactone, Polyacetale wie z.B. Polyoxymethylenen oder wasserunlösliche Formale, z.B. Polybutandiolformal oder Polyhexandiolformal, Polyoxyalkylenpolyolen wie z.B. Polyoxybutylenglykolen, Polyoxypropylenglykolen, Polyoxybutylen-polyoxypropylenglykolen, Polyoxybutylen-polyoxyethylenglykolen und Polyoxybutylen-polyoxypropylen-polyoxyethylen-glykolen oder Mischungen aus mindestens zwei der genannten Polyhydroxylverbindungen. Bevorzugt verwendet werden difunktionelle Polyhydroxylverbindungen aus den Gruppen der Polyesterpolyole, der hydroxylhaltigen Polycarbonate und der Polyoxybutylenglykole sowie Mischungen von mindestens zwei dieser Gruppen.

Die Polyhydroxylverbindungen können nach den bekannten Verfahren hergestellt werden.

Im übrigen kann die Umsetzung unter an sich bekannten Bedingungen und üblichen Zusätzen, wie beispielsweise in EP-A-482 476 beschrieben, vorgenommen werden. So können die üblichen bekannten Kettenverlängerungsmittel (z.B., Diamine und Alkanolamine, vorzugsweise Alkandiole mit 2 bis 12 Kohlenstoffatomen, besonders bevorzugt mit 2, 4 oder 6 Kohlenstoffatomen, und Dialkylenglykole sowie Polyoxyalkylenglykole), und/oder mindestens trifunktionelle Vernetzungsmittel mit Gewichtsanteilen von 5 bis 50 Gew.-%, für die Herstellung von harten Polyurethanelastomeren vorzugsweise 30 bis 50 Gew.-%, bezogen aus die Komponente (b), eingesetzt werden. Des weiteren können die bekannten Treibmittel, wie z.B. Stoffe, die einen Siedepunkt unter Normaldruck im Bereich von - 40°C bis 120°C besitzen, Gase sowie feste Treibmittel und Wasser, die üblichen Katalysatoren, wie z.B. anorganische und organische Zinnverbindungen und stark basische Amine, z.B. in Anteilen von 0,001 bis 3 Gew.-%, insbesondere 0,01 bis 1 Gew.-%, bezogen auf das Gewicht der Komponenten (a) und (b), der Kettenverlängerungsund Vernetzungsmittel sowie der zerkleinerten Polyurethanelastomere, und übliche Zusatzstoffe verwendet werden. Die Zusatzstoffe können z.B. enthalten: oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfen, Farbstoffe und Pigmente. Nähere Angaben über die üblichen Grund-, Hilfs- und Zusatzstoffe, sind der Fachliteratur zu entnehmen (siehe u.a. "Kunststoff-Handbuch", Band 7, Polyurethane, 2. Auflage, 1983, herausgegeben von G. Oertel, Carl Hauser Verlag, München).

Die nach dem erfindungsgemäßen Verfahren hergestellten mikrozellulären Polyurethanelastomere zeigen Dichten von 0,35 bis 0,80 g/cm$^3$ und finden Verwendung zur Herstellung von Formkörpern, die aufgrund ihrer sehr guten Dämpfungseigenschaften u.a. im Bereich der Feder- und Dämpfungselemente z.B. bei Verkehrsmitteln und im Maschinenbau eingesetzt werden.

Die erfindungsgemäß unter Einarbeiten und Umsetzen von zerkleinerten mikrozellulären Polyurethanelastomeren in der Reaktionsmischung hergestellten mikrozellulären Polyurethanelastomere weisen unerwartet hervorragende statische und dynamische Kennwerte auf, die denen von Vergleichsprodukten, die ohne die wiederverwendeten Elastomere hergestellt wurden, entsprachen.

Dies wird anhand der folgenden Beispiele belegt:

Beispiele

Vergleichsbeispiel I

a) Herstellung eines Isocyanatgruppe aufweisenden Prepolymers auf 1,5-NDI-Basis

1000 g (0,5 mol) eines Polyethandioladipats mit einem durchschnittlichen Molekulargewicht von 2000 (errechnet aus der experimentell ermittelten Hydroxylzahl) wurden auf 140°C erwärmt und bei dieser Temperatur mit 240 g (1,14 mol) festem 1,5-NDI unter intensivem Rühren versetzt und zur Reaktion gebracht.

Man erhielt ein Prepolymer mit einem NCO-Gehalt von 4,20 Gew.-% und einer Viskosität bei 90°C von 2300 mPas (gemessen mit einem Rotationsviskosimeter der Firma Haake, mit dem auch die Viskositäten der folgenden Beispiele gemessen werden).

b) Herstellung zelliger Formteile
Vernetzerkomponente, die bestand aus

| 20,7 | Gew.-Teilen 2,2',6,6'-Tetraisopropyldiphenyl-carbodiimid |
|---|---|
| 2,9 | Gew.-Teilen eines Gemisches aus ethoxylierter Öl- und Ricinolsäure mit durchschnittlich 9 Oxyethyleneinheiten |
| 3,8 | Gew.-Teilen des Monoethanolaminsalzes der n-Alkyl-benzolsulfonsäure mit $C_9$- bis $C_{15}$-Alkylresten |
| 36,3 | Gew.-Teilen Natriumsalz von sulfatiertem Ricinusöl |
| 36,3 | Gew.-Teilen Wasser und |
| 0,03 | Gew.-Teilen einer Mischung aus |
| | 30 Gew.-% Pentamethyl-diethylentriamin und |
| | 70 Gew.-% N-Methyl-N'-(dimethylaminomethyl) -piperazin |

200 g des auf 90°C temperierten Isocyanatprepolymeres, hergestellt nach Vergleichsbeispiel Ia, wurden mit 4,64 g der Vernetzerkomponente ca. 8 Sekunden lang intensiv gerührt. Die Reaktionsmischung wurde danach in ein auf 80°C temperiertes, verschließbares, metallisches Formwerkzeug eingefüllt, das Formwerkzeug verschlossen und die Reaktionsmischung aushärten gelassen. Nach 25 Minuten wurde der mikrozellulare Formkörper entformt und zur thermischen Nachhärtung bei 110°C 16 Stunden getempert.

Beispiel 1

a) Herstellung eines Isocyanatgruppen aufweisenden Prepolymers auf 1,5-NDI-Basis mit 4 % Mahlgut

1000 g (0,5 mol) eines Polyethandioladipats mit einem durchschnittlichen Molekulargewicht von 2000 (errechnet aus der experimentell ermittelten Hydroxylzahl) wurden auf 140°C erwärmt und bei dieser Temperatur mit 240 g (1,14 mol) festem 1,5-NDI unter intensivem Rühren versetzt und zur Reaktion gebracht. Nach Abkühlen auf 90°C wurde das Prepolymer unter Rühren mit 49,6 g eines zerkleinerten mikrozellulären Polyurethanelastomers auf Basis von 1,5-NDI, hergestellt nach Vergleichsbeispiel I (durchschnittliche Korngröße 500 µm, 6 h bei 120°C getrocknet), versetzt.

Man erhielt ein Prepolymer mit einem NCO-Gehalt von 3,95 Gew.-% und einer Viskosität von 3600 mPas.

b) Herstellung zelliger Formteile
Aus 100 Gew.-Teile des Prepolymers nach Beispiel 1a und 4,36 Gew.-Teilen der Vernetzerkomponente nach Vergleichsbeispiel Ib wurden analog den Angaben des Vergleichsbeispiels I Formkörper hergestellt, die nach einer Formstandzeit von 30 Minuten entformt und zur thermischen Nachhärtung bei 110°C 16 Stunden getempert wurden.

Beispiel2

a) Herstellung eines Isocyanatgruppen aufweisenden Prepolymers auf 1,5-NDI-Basis mit 6 % Mahlgut

1000 g (0,5 mol) eines Polyethandioladipats mit einem durchschnittlichen Molekulargewicht von 2000 (errechnet aus der experimentell ermittelten Hydroxylzahl) wurden auf 140°C erwärmt und bei dieser Temperatur mit 240 g (1,14 mol) festem 1,5-NDI unter intensivem Rühren versetzt und zur Reaktion gebracht. Nach Abkühlen auf 90°C wurde das Prepolymer unter Rühren mit 74,4 g eines zerkleinerten mikrozellulären Polyurethanelastomers auf Basis von 1,5-NDI, hergestellt nach Vergleichsbeispiel I (durchschnittliche Korngröße 500 µm, 6 h bei 120°C getrocknet), versetzt.
Man erhielt ein Prepolymer mit einem NCO-Gehalt von 3,89 Gew.% und einer Viskosität bei 90°C von 3700 mPas.

b) Herstellung zelliger Formteile
Aus 200 Gew.-Teile des Prepolymers nach Beispiel 2a und 4,28 Gew.-Teilen der Vernetzerkomponente nach Vergleichsbeispiel Ib wurden analog den Angaben des Vergleichsbeispiels I Formkörper hergestellt, die nach einer Formstandzeit von 30 Minuten entformt und zur thermischen Nachhärtung bei 110°C 16 Stunden getempert wurden.

Beispiel 3

a) Herstellung eines Isocyanatgruppen aufweisenden Prepolymers auf 1,5-NDI-Basis mit 8 % Mahlgut

1000 g (0,5 mol) eines Polyethandioladipats mit einem durchschnittlichen Molekulargewicht von 2000 (errechnet aus der experimentell ermittelten Hydroxylzahl) wurden auf 140°C erwärmt und bei dieser Temperatur mit 240 g (1,14 mol) festem 1,5-NDI unter intensivem Rühren versetzt und zur Reaktion gebracht. Nach Abkühlen auf 90°C wurde das Prepolymer unter Rühren mit 99,2 g eines zerkleinerten mikrozellulären Polyurethanelastomers auf Basis von 1,5-NDI, hergestellt nach Vergleichsbeispiel I (durchschnittliche Korngröße 500 µm, 6 h bei 120°C getrocknet), versetzt.
Man erhielt ein Prepolymer mit einem NCO-Gehalt von 3,83 Gew.-% und einer Viskosität bei 90°C von 3800 mPas.

b) Herstellung zelliger Formteile
Aus 200 Gew.-Teilen des Prepolymers nach Beispiel 3a und 4,2 Gew.-Teilen der Vernetzerkomponente nach Vergleichsbeispiel Ib wurden analog der Angaben des Vergleichsbeispiels I Formkörper hergestellt, die nach einer Formstandzeit von 30 Minuten entformt und zur thermischen Nachhärtung bei 110°C 16 Stunden getempert wurden.

Beispiel 4

a) Herstellung eines Isocyanatgruppen aufweisenden Prepolymers auf 1,5-NDI-Basis mit 4 % Mahlgut
1000 g (0,5 mol) eines Polyethandioladipats mit einem durchschnittlichen Molekulargewicht von 2000 (errechnet aus der experimentell ermittelten Hydroxylzahl) wurden auf 130°C erwärmt und bei dieser Temperatur unter intensivem Rühren mit 49,6 g eines zerkleinerten mikrozellulären Polyurethanelastomers auf Basis von 1,5-NDI, hergestellt nach Vergleichsbeispiel I (durchschnittliche Korngröße 500 µm, 6 h bei 120°C getrocknet), versetzt. Das Gemisch wurde auf 140°C erhitzt und bei dieser Temperatur mit 240 g (1,14 mol) festem 1,5-NDI unter intensivem Rühren versetzt und zur Reaktion gebracht.
Man erhielt ein Prepolymer mit einem NCO-Gehalt von 3,97 Gew.-% und einer Viskosität bei 90°C von 3200 mPas.

b) Herstellung zelliger Formteile
Aus 200 Gew.-Teilen des Prepolymers nach Beispiel 4a und 4,32 Gew.-Teilen der Vernetzerkomponente nach Vergleichsbeispiel Ib wurden analog der Angaben des vergleichsbeispiels I Formkörper hergestellt, die nach einer Formstandzeit von 30 Minuten entformt und zur thermischen Nachhärtung bei 110°C 16 Stunden getempert wurden.

Beispiel 5

a) Herstellung eines Isocyanatgruppen aufweisenden Prepolymers auf 1,5-NDI-Basis mit 4 % Mahlgut

1000 g (0,5 mol), eines Polyethandioladipats mit einem durchschnittlichen Molekulargewicht von 2000 (errechnet aus der experimentell ermittelten Hydroxylzahl) wurden auf 140°C erwärmt und bei dieser Temperatur mit 240 g (1,14 mol) festem 1,5-NDI unter intensivem Rühren versetzt und zur Reaktion gebracht. Bei einer Temperatur von 130°C wurde das Prepolymer unter Rühren mit 49,6 g eines zerkleinerten mikrozellulären Polyurethanelastomers auf Basis von 1,5-NDI, hergestellt nach Vergleichsbeispiel I (durchschnittliche Korngröße 500 µm, 6 h bei 120°C getrocknet), versetzt.

Man erhielt eine Prepolymer mit einem NCO-Gehalt von 3,97 Gew.-% und einer Viskosität bei 90°C von 3300 mPas.

b) Herstellung zelliger Formteile

Aus 200 Gew.-Teilen des Prepolymers nach Beispiel 5a und 4,38 Gew.-Teilen der Vernetzerkomponente nach Vergleichsbeispiel Ib wurden analog der Angaben des Vergleichsbeispiels I Formkörper hergestellt, die nach einer Formstandzeit von 30 Minuten entformt und zur thermischen Nachhärtung bei 110°C 16 Stunden getempert wurden.

An den nach Angaben des Vergleichsbeispiels und der Beispiele 1 bis 5 hergestellten zelligen Formteilen wurden die statischen und dynamischen mechanischen Eigenschaften der mikrozellularen PU-Elastomeren gemessen.

Die statischen mechanischen Eigenschaften wurden anhand der Zugfestigkeit nach DIN 53 571, der Bruchdehnung nach DIN 53 571, der Weiterreißfestigkeit nach DIN 53 515 und dem Druckverformungsrest bei 80°C in Abwandlung zur DIN 53 572 unter Verwendung von 18 mm hohen Abstandsstücken und Prüfkörpern mit einer Grundfläche von 40 x 40 mm und einer Höhe von 30 ± 1 mm gemessen. Die Berechnung des Druckverformungsrestes (DVR) erfolgte nach der Gleichung

$$DVR = \frac{H_0\ H_2}{H_0 - H_1} \cdot 100\ [\%]$$

in der bedeutet

$H_0$     die ursprüngliche Höhe des Prüfkörpers in mm,
$H_1$     die Höhe des Prüfkörpers in verformten Zustand in mm und
$H_2$     die Höhe des Prüfkörpers nach der Entspannung in mm.

Die dynamische mechanischen Eigenschaften wurden bestimmt anhand der Wegzunahme (WZ) bei maximaler Krafteinwirkung und dem Setzbetrag (SB). Der Formkörper zur Messung des Setzbetrages bestand aus einer zylinderischen Prüffeder mit 3 Segmenteinschnürungen mit einer Höhe von 100 mm, einem Außendurchmesser von 50 mm und einem Innendurchmesser von 10 mm. Nach Belastung der Feder über 100.000 Lastwechsel mit einer Kraft von 6 kN und einer Frequenz von 1,2 Hz wurde der SB gemessen als Differenz zwischen Ausgangs- und Endwert der Prüffederhöhe und angegeben in Prozent. Der Setzbetrag ist ein Maß für die bleibende Verformung des zelligen PU-Elastomeren während des Dauerschwingversuches. Je kleiner dieser Setzbetrag ist, desto größer ist die dynamische Leistungsfähigkeit des Materials.

Die Ermittlung der Höhe $H_R$ zur Bestimmung des Setzbetrages nach dynamischer Prüfung erfolgte nach Aufnahme der Kennlinie der Feder: $H_0$ ist die Ausgangshöhe; der Formkörper wird 3x mit maximaler Kraft vorgedrückt (gemäß Kennlinien maximal Kraft) dann im 4. Zyklus die Kennlinie aufgenommen mit V=50 mm/min. Eindrückgeschwindigkeit. Nach 10 min. wird $H_1$ bestimmt; das ist die Höhe des Bauteils nach Aufnahme der Kennlinie. Erst danach startete die dynamische Prüfung.

$H_R$ = Resthöhe nach dynamischer Prüfung gemessen nach 24 h Lagerung bei 23°C/50 % rel. Luftfeuchte nach Ende der dynamischen Prüfung. Als Bezugspunkt (=Ausgangshöhe) zur Ermittlung des permanenten Setzbetrages nach dynamischer Prüfung wurde aber $H_0$, die Höhe der Feder in völlig "neuwertigem" Zustand, ohne jede Kompression, genommen:

$$SB = \frac{H_0 - H_R}{H_o} \times 100 \: [\%]$$

Die dynamische Prüfung wurde ohne zusätzliche Kühlung in einem klimatisierten Raum bei 23°C und 50 % relative Luftfeuchtigkeit durchgeführt. Die an den Prüfkörpern gemessenen mechanischen Eigenschaften sind in der folgenden Tabelle zusammengefaßt.

Die erfindungsgemäßen zelligen Polyurethan-(PUR)-Elasomere zeigen in den statisch- und dynamisch-mechanischen Eigenschaften keine Unterschiede zu den im Vergleichsversuch hergestellten Elastomeren. So entsprechen die in der Tabelle 1 dargestellten Kennwerte wie z.B. Druckverformungsrest, Zugfestigkeit, Dehnung, Weiterreißfestigkeit, Setzbetrag und Wegzunahme der Beispiele 1 bis 5 denen des Vergleichsbeispieles I.

Tabelle

Statische und dynamische mechanische Eigenschaften der zelligen PUR-Elastomere gemäß Vergleichs-beispiel I und Beispielen 1 bis 5

| Beispiel Vergleichsbeispiel | I | 1 | 2 | 3 | 4 | 5 |
|---|---|---|---|---|---|---|
| Anteil Mahlgut [%] | - | 4 | 6 | 8 | 4 | 4 |
| NCO-Gehalt [%] | 4,2 | 3,95 | 3,89 | 3,83 | 3,97 | 3,97 |
| Viskosität 90°C [mPas] | 2300 | 3600 | 3700 | 3800 | 3200 | 3300 |
| Statisch-mechanische Eigenschaften | | | | | | |
| Druckverformungsrest (80°C) [%] | 13,9 | 12 | 15,3 | 14,3 | 14,9 | 15,8 |
| Zugfestigkeit [N/mm²] | 4,4 | 4,9 | 4,6 | 3,8 | 4,6 | 5,2 |
| Dehnung [%] | 370 | 370 | 340 | 280 | 360 | 380 |
| Weiterreißfestigkeit [N/mm] | 16,6 | 17,1 | 18,1 | 16,9 | 16,4 | 18,2 |
| Dynamisch-mechanische Eigenschaften | | | | | | |
| Setzbetrag [%] | 6-8 | 6,0-7,0 | 6,8-7,2 | 6,0-7,9 | 5,8-7,2 | 7,2-7,5 |
| Wegzunahme [mm] | 1,4-2,1 | 2,0-2,1 | 2,0-2,6 | 1,9-2,3 | 2,1-2,2 | 2,4-2,5 |

**Patentansprüche**

1. Verfahren zur Wiederverwendung von mikrozelligen Polyurethanen, **dadurch gekennzeichnet, daß** man die Polyurethane zerkleinert und in einem ersten Reaktionsschritt mit einem Gemisch, das die zerkleinerten Polyurethane in einer Menge von 0,1 bis 40 Gew.-%, bezogen auf die Polyadditionsmischung,

   (a) Polyisocyanate,

   (b) gegenüber Isocyanaten reaktive Substanzen mit aktiven Wasserstoffen,
   und gegebenenfalls

   (c) Kettenverlängerungs- und/oder Vernetzungsmittel, Katalysatoren, Treibmittel und üblichen Zusatzstoffe

   enthält, ein Prepolymer herstellt und dieses in einem zweiten Schritt mit Wasser und gegebenenfalls (c) zu dem mikrozellulären Polyurethanelastomer mit Dichten von 0,35 bis 0,80 g/cm$^3$ umsetzt.

2. Verfahren nach Anspruch 1, **dadurch gekennzeichnet, daß** die zerkleinerten Polyurethane eine Korngröße von 0,01 bis 2 mm aufweisen.

3. Verfahren nach Anspruch 1, **dadurch gekennzeichnet, daß** man als zerkleinerten Polyurethane mikrozellige Polyurethanelastomere verwendet, die die gleiche Struktur, wie die durch Polyadditionsreaktion aus den Ausgangsstoffen (a), (b) und gegebenenfalls (c) erhältlichen Polyurethane, aufweisen.

4. Verfahren nach Anspruch 1, **dadurch gekennzeichnet, daß** das Prepolymer einen NCO-Gehalt von 1 bis 30 Gew.-% aufweist.

5. Verfahren nach Anspruch 1, **dadurch gekennzeichnet, daß** man als Polyisocyanate (a) Toluylendiisocyanat, Diphenylmethandiisocyanat, 3,3'-Dimethyl-4,4'-diisocyanat-diphenyl, ein aliphatisches Diisocyanat mit 4 bis 12 Kohlenstoffatomen oder ein cycloaliphatisches Diisocyanat mit 6 bis 18 Kohlenstoffatomen, oder 1,5-Naphthylendiisocyanat einsetzt.

6. Verfahren nach Anspruch 1, **dadurch gekennzeichnet, daß** man als Komponente (b) Polyhydroxylverbindungen mit einer Funktionalität von 2 bis 3 und einem Molekulargewicht von 500 bis 6000 g/mol verwendet.

**Claims**

1. A process for the recycling of microcellular polyurethanes, which comprises comminuting the polyurethanes and using them in a first reaction step together with a mixture which comprises the comminuted polyurethanes in an amount of from 0.1 to 40% by weight, based on the polyaddition mixture,

   (a) polyisocyanates,

   (b) substances reactive toward isocyanates and containing active hydrogens,
   and, if desired,

   (c) chain extenders and/or crosslinkers, catalysts, blowing agents and customary additives,

   to prepare a prepolymer and in a second step reacting this prepolymer with water and, if desired, (c) to give the microcellular polyurethane elastomer having a density of from 0.35 to 0.80 g/cm$^3$.

2. A process as claimed in claim 1, wherein the comminuted polyurethanes have a particle size of from 0.01 to 2 mm.

3. A process as claimed in claim 1, wherein the comminuted polyurethanes used are microcellular polyurethane elastomers which have the same structure as the polyurethanes obtainable from the starting materials (a), (b) and, if desired, (c) by a polyaddition reaction.

4. A process as claimed in claim 1, wherein the prepolymer has an NCO content of from 1 to 30% by weight.

**5.** A process as claimed in claim 1, wherein the polyisocyanates (a) used are tolylene diisocyanate, diphenylmethane diisocyanate, 3,3'-dimethyl-4,4'-diisocyanatobiphenyl, an aliphatic diisocyanate having from 4 to 12 carbon atoms or a cycloaliphatic diisocyanate having from 6 to 18 carbon atoms, or naphthylene 1,5-diisocyanate.

**6.** A process as claimed in claim 1, wherein the component (b) used comprises polyhydroxyl compounds having a functionality of from 2 to 3 and a molecular weight of from 500 to 6000 g/mol.

**Revendications**

**1.** Procédé pour la réutilisation de polyuréthanes microcellulaires, **caractérisé en ce que** l'on broie les polyuréthanes et l'on prépare un pré-polymère dans une première étape de réaction avec un mélange qui contient les polyuréthanes broyés en une quantité de 0,1 à 40% en poids, par rapport au mélange de polyaddition,

(a) des polyisocyanates,
(b) des substances réactives envers les isocyanates avec des atomes d'hydrogène actifs,
et éventuellement
(c) des agents d'extension de chaîne et/ou des agents de réticulation, des catalyseurs, des agents d'expansion et des additifs courants

et,
**en ce que** l'on le transforme dans une deuxième étape avec de l'eau et éventuellement (c), en l'élastomère de polyuréthane microcellulaire ayant des masses volumiques de 0,35 à 0,80 g/cm$^3$.

**2.** Procédé selon la revendication 1, **caractérisé en ce que** les polyuréthanes broyés présentent une granulométrie de 0,01 à 2 mm.

**3.** Procédé selon la revendication 1, **caractérisé en ce que** l'on emploie comme polyuréthanes broyés, des élastomères de polyuréthane microcellulaires qui présentent la même structure que les polyuréthanes que l'on peut obtenir par réaction de polyaddition à partir des matières de départ (a), (b) et éventuellement (c).

**4.** Procédé selon la revendication 1, **caractérisé en ce que** le prépolymère présente une teneur en groupes NCO de 1 à 30% en poids.

**5.** Procédé selon la revendication 1, **caractérisé en ce que** l'on met en oeuvre en tant que polyisocyanates (a), le diisocyanate de toluylène, le diisocyanate de diphénylméthane, le 3,3'-diméthyl-4,4'-diisocyanato-diphényle, un diisocyanate aliphatique ayant 4 à 12 atomes de carbone ou un diisocyanate cycloaliphatique ayant 6 à 18 atomes de carbone, ou le diisocyanate de 1,5-naphtylène.

**6.** Procédé selon la revendication 1, **caractérisé en ce que** l'on emploie comme composant (b), des composés polyhydroxylés ayant une fonctionnalité de 2 à 3, et une masse moléculaire de 500 à 6 000 g/mole.